# EUROPÄISCHE PATENTSCHRIFT

(11) **EP 1 155 155 B1**
(45) Veröffentlichungstag und Bekanntmachung des Hinweises auf die Patenterteilung: **11.11.2009**
(21) Anmeldenummer: 00991060.5
(22) Anmeldetag: 14.12.2000
(51) Int. Cl.: C22B 15/00, C22B 3/18, C22B 1/06, C22B 1/00

(54) **SULFIDIERUNG VON SULFIDERZEN ZUR NASSMETALLURGISCHEN GEWINNUNG VON KUPFER AND ANDEREN METALLEN**
SULPHIDISATION OF SULPHIDE ORES FOR HYDROMETALLURGICAL EXTRACTION OF COPPER AND OTHER METALS
SULFURATION DE MINERAIS SULFURES POUR L'EXTRACTION HYDROMETALLURGIQUE DE CUIVRE ET D'AUTRES METAUX

(30) Priorität: 14.12.1999 DE 19960132
(43) Veröffentlichungstag der Anmeldung: 21.11.2001
(73) Patentinhaber: Beckmann, Alexander, 46487 Wesel (DE)
(72) Erfinder: Beckmann, Alexander, 46487 Wesel (DE)
(74) Vertreter: Meyers, Hans-Wilhelm
(86) Internationale Anmeldenummer: PCT/DE2000/004447
(87) Internationale Veröffentlichungsnummer: WO 2001/044524

(56) Entgegenhaltungen:
- WO-A-99/36582
- DE-A- 1 946 558
- DE-A- 2 146 334
- DE-A- 2 214 688
- DE-A- 2 427 158
- GB-A- 1 248 663
- US-A- 3 459 535
- US-A- 3 985 555
- US-A- 4 619 814
- DATABASE WPI Section Ch, Week 199147, 1903 Derwent Publications Ltd., London, GB; Class D16, AN 1991-340114 XP002166815 & AU 52258 90 A (GEN MINING METALS &), 3. Oktober 1991 (1991-10-03)
- DATABASE WPI Section Ch, Week 197445 Derwent Publications Ltd., London, GB; Class M25, AN 1974-78146V XP002166816 & JP 49 035220 A (MITSUI MINING & SMELTING CO), 10. April 1974 (1974-04-10)
- RAMDOHR P.: 'Die Erzmineralien und ihre Verwachsungen', * Seite 734 *

## Beschreibung

Die Erfindung betrifft ein Verfahren zur Gewinnung von Metallen aus einem kupfersulfidischen und/oder kupfereisensulfidischem Erz oder Erzkonzentrat.

Der weitaus größte Teil der weltweiten Kupferproduktion (ca. 90%) wird aus Kupfersulfidmineralen gewonnen. Unter den Kupfersulfidmineralen sind vor allem zu nennen Chalkopyrit (CuFeS₂), Bornit (Cu₅FeS₄), Cubanit CuFeS₄), Chalcosin (Cu₂S), Digenit (Cu₉S₅), Covellin (CuS), Enargit (Cu₃AsS₄), Tennantit (Cu₁₂As₄S₁₃) und Tetraedrit (Cu₁₂Sb₄S₁₃). Der Chalkopyrit ist unter den Kupfersulfidmineralen dabei das am stärksten verbreitete Mineral, es besitzt daher die größte wissenschaftliche und wirtschaftliche Bedeutung bei der Entwicklung neuer Gewinnungsverfahren.
Der Chalkopyrit zeichnet sich außerdem dadurch aus, dass in ihm regelmäßig ein Gehalt an Gold, Platinmetallen und anderen seltenen Metallen sowie seltenen Erden gelagert ist.

Die Kupfersulfidminerale werden aus Erzen gewonnen, die in der Regel gemahlen und im Flotationsverfahren zu einem Erzkonzentrat aufkonzentriert werden, wobei insbesondere ein wesentlicher Teil der im Mahlgut enthaltenen Silikate abgetrennt werden.

Mittlerweile gibt es neben den bekannten pyrometallurgischen und hydrometallurgischen Verfahren verschiedene Ansätze, Kupfer und andere in den Kupfersulfidmineralen vorkommenden Metalle aus den Erzen bzw. Erzkonzentraten mittels Bioleaching-Verfahren zu lösen. Hierbei besteht das Problem, dass mit den bekannten Verfahren aus Chalkopyrit nur ca. 20% des in ihm enthaltenen Kupfers herausgelöst werden können, da eine Passivierung des Chalkopyrits eintritt.

Eine Vielzahl von Versuchen zur Vermeidung der Passivierung des Chalkopyrits wurden im Labormaßstab zwar erfolgreich durchgeführt, jedoch konnte hieraus bislang keine verwendbare Verfahrenstechnik zur Metallgewinnung abgeleitet werden.

US-A-3 459 535 offenbart die Reaktion von komplexen Cu-Fe-S Erzen mit Schwefel, damit die nachgeschaltete saure Auslaugung zum gewinnen von Kupfer und Eisen verbessert wird.

Somit liegt der Erfindung die Aufgabe zugrunde, ein verbessertes Verfahren zur Gewinnung von Kupfer und anderen Metallen aus Chalkopyrit zur Verfügung zu stellen.

Diese Aufgabe wird mit dem Verfahren gemäß Anspruch 1 gelöst, bei dem
1. in einem offenen Prozess Chalkopyrit durch Zugabe von Schwefel in Covellin und Pyrit umgesetzt wird, und
2. Kupfer und andere im Covellin, Pyrit und Begleitsulfiden angereicherte, lösliche Metalle herausgelöst werden.

Diese Umsetzung wird durch die Formel

CuFeS₂ + S → CuS + FeS₂ (1)

dargestellt.
Es hat sich gezeigt, dass sich der Chalkopyrit bei geeigneter Prozessführung nahezu vollständig in Covellin und Pyrit umsetzen lässt. Bei dieser Umsetzung entsteht aus einem Chalkopyritkorn des Mahlguts ein Korn mit einem Kern aus Pyrit und einem Mantel aus Covellin. Im Gegensatz zu Chalkopyrit lässt sich aus Covellin Kupfer sowie übrige darin angereicherte Metalle problemlos mit herkömmlichen Laugungsverfahren herauslösen, da hier die Probleme der Passivierung nicht bestehen.
Diese Reaktion ist exotherm, so dass ein vergleichsweise geringer Energieaufwand für die Umsetzung nötig ist. Die Umsetzung von Chalkopyrit in Covellin erfolgt in einem Drehrohrofen oder in einem Wirbelschichtreaktor.
Ein mögliches Verfahren zur Gewinnung von Kupfer aus Covellin wird mit der Formel

CuS + Fe₂(SO₄)₃ → CuSO₄ + 2FeSO₄ +S (2)

beschrieben. Das erzeugte Kupfersulfat ist ebenso wie das Eisensulfat säurelöslich, Eisen und Kupfer gehen somit in Lösung und können aus der Lösung abgetrennt werden.

Ebenso kann das Eisen aus dem Pyrit oxidiert und herausgelöst werden.

Übrig bleibt ein im Mahlgut enthaltenes Gemisch aus Edel- und sonstigen Metallen und seltenen Erden, insbesondere aus Gold, Silber, Platin und Platinmetalle, Kobalt, Nickel und Zink, das sich als Residuum am Boden des Tanks, in dem der Lösungsprozess abläuft, absetzt.

Mit neuartigen Bioleaching-Verfahren kann das Kupfer besonders umweltfreundlich und unter vergleichsweise geringer Erzeugung von Schwefelsäure herausgelöst werden.
Dabei wird das Covellin gemäß

CuS + O₂ → CuSO₄

bei Anwesenheit spezieller Bakterien oxidiert und in wässriger Lösung abgetrennt.

Die Umsetzung von Chalkopyrit sollte bevorzugt in einer inerten Atmosphäre ablaufen, beispielsweise unter Stickstoff, Schwefeldioxid oder Argon.

Als bevorzugter Temperaturbereich für die Umsetzung hat sich der Bereich zwischen Raumtemperatur und 501 °C herausgestellt, insbesondere bei 410°C kann die Umsetzung vergleichsweise schnell erfolgen.

Der Umsetzungsprozess von Chalkopyrit zu Covellin kann durch eine Mikrowellenbestrahlung unterstützt werden. Da durch die Mikrowellen die einzelnen Körner des Mahlgutes gleichermaßen Innen wie Außen aufgeheizt werden, können hierdurch die bei der Umsetzung ablaufenden Diffusionsprozesse bei Bildung des Pyritkerns und des Mantels aus Covellin beschleunigt werden. Durch diese Verbesserung der Reaktionskinetik kann der offene Prozess beschleunigt und damit die Wirtschaftlichkeit des Verfahrens erhöht werden.

Je nach Umsetzungstemperatur und Grad einer möglichen Mikrowellenbestrahlung kann die Umsetzung während einer Dauer von 0,5 h bis 3 h, insbesondere von 2 h, erfolgen. Während bei 30 Minuten ein Umsetzungsgrad von 80 % ohne weiteres erreicht werden kann, ist der Chalkopyrit nach 3 h nahezu vollständig umgesetzt.

Der Schwefel sollte dem Chalkopyrit stöchiometrisch zugeführt werden.

Dabei kann der Schwefel dem Mahlgut in festem Zustand zugeführt werden, wobei die Umsetzung des Chalkopyrits bei Umgebungsdruck erfolgen kann, bevorzugt jedoch mit einem Überdruck von bis zu 10 bar durchgeführt werden sollte. Um zu vermeiden, dass bei Temperaturen für die Umsetzung zu viel Schwefel verdampft, kann es von Vorteil sein, wenn die Umsetzung in einer mit Schwefeldampf gesättigten Atmosphäre abläuft.

Andererseits kann die Umsetzung auch ohne Zugabe festen Schwefels in einer gasförmige Schwefel enthaltenden Atmosphäre bei Unterdruck erfolgen.

Auch ist die Umsetzung unter Zugabe eines Schwefelplasmas möglich.

Versuche haben gezeigt, dass die Umsetzung in Covellin insbesondere bei einer Bestrahlung des Gemisches aus Mahlgut und Schwefel mit Mikrowellen mit einer auf die Menge des Mahlguts bezogenen spezifischen Energiedichte von 8 - 35 kWh/t optimiert ist. Es können sowohl Mikrowellen mit 815 MHz als auch mit 2,45 GHz verwendet werden.

## Patentansprüche

1. Verfahren zur Gewinnung von Metallen aus kupfersulfidischen und/oder kupfereisensulfidischen Erzen mit Laugungsschritten mikrobiologischer und/oder chemischer Art zur Lösung der Metalle, **dadurch gekennzeichnet, dass**
1. in einem den Laugungsschritten vorgeschaltetem Umwandlungsschritt die Erze unter Schwefelzugabe und gegebenenfalls Additiven zu Covellin, Pyrit und Begleitsulfiden in einem Drehrohrofen oder Wirbelschichtreaktor umgesetzt werden, und
2. aus dem Covellin Kupfer mit Laugungsverfahren herausgelöst wird.

2. Verfahren nach Anspruch 1, **dadurch gekennzeichnet, dass** das Eisen aus dem Reaktionsprodukt gewonnen wird und dass in dem Reaktionsprodukt eingelagerte Metalle und seltene Erden, insbesondere Gold, Silber, Platin (incl. Platingruppenelementen), Kobalt, Nickel und Zink abgetrennt werden.

3. Verfahren nach Anspruch 1 oder 2, **dadurch gekennzeichnet, dass** die Metalle mit einem Laugungs- und Bloleaching-Verfahren gelöst werden und Schwefel aus dem Covellin, Pyrit und anderen zur Sulfidgruppe gehörigen Mineralen mit einem weiteren Prozess extrahiert werden.

4. Verfahren nach einem der vorstehenden Ansprüche, **dadurch gekennzeichnet, dass** die Umsetzung in inerter Atmosphäre durchgeführt wird.

5. Verfahren nach Anspruch 1, **dadurch gekennzeichnet, dass** die Umwandlung in einem offenen Prozess durchgeführt wird.

6. Verfahren nach einem der vorstehenden Ansprüche, **dadurch gekennzeichnet, dass** die Umsetzung bei einer Temperatur zwischen Raumtemperatur und 501°C, insbesondere bei 410°C, erfolgt.

7. Verfahren nach einem der vorstehenden Ansprüche, **dadurch gekennzeichnet, dass** die Umsetzung durch Mikrowellenbestrahlung unterstützt wird.

8. Verfahren nach einem der vorstehenden Ansprüche, **dadurch gekennzeichnet, dass** die Umsetzung während einer Dauer von 0,5 h bis 24 h, insbesondere von 2 h, erfolgt.

9. Verfahren nach einem der vorstehenden Ansprüche, **dadurch** gekenntzeichnet, dass Schwefel stöchiometrisch zugeführt wird.

10. Verfahren nach einem der vorstehenden Ansprüche, **dadurch gekennzeichnet, dass** Schwefel in festem Zustand zugeführt wird und die Umsetzung bei einem Druck bis zu 10 bar durchgeführt wird.

11. Verfahren nach einem der Ansprüche 1 bis 9, **dadurch gekennzeichnet, dass** die Umsetzung in einer mit Schwefeldampf gesättigten Atmosphäre abläuft.

12. Verfahren nach einem der Ansprüche 1 bis 9, **dadurch gekennzeichnet, dass** Schwefel in gasförmigem Zustand zugeführt wird und die Umsetzung bei einem Unterdruck erfolgt.

13. Verfahren nach einem der Ansprüche 1 bis 9, **dadurch gekennzeichnet, dass** die Umsetzung mit einem Schwefelplasma erfolgt.

## Claims

1. A process for extracting metals from copper-sulfidic and/or copper/iron-sulfidic ores comprising leaching steps of microbiological or chemical nature for leaching out the metals, **characterized in that**
1. the ores are converted to covelline, pyrite and accompanying sulfides by the addition of sulfur and additives in a rotary-tube furnace or fluidized bed reactor in a conversion step interposed prior to the leaching steps; and
2. copper is leached out from said covelline by leaching methods.

2. The process according to claim 1, **characterized in that** said iron is extracted from the reaction product and that metals and rare earths deposited in the reaction product, especially gold, silver, platinum (including elements of the platinum group), cobalt, nickel and zinc, are separated off.

3. The process according to claim 1 or 2, **characterized in that** the metals are leached out using a leaching or bioleaching process, and sulfur is extracted from the covelline, pyrite and other minerals belonging to the sulfide group by a further process.

4. The process according to any of the preceding claims, **characterized in that** said conversion is performed in an inert atmosphere.

5. The process according to claim 1, **characterized in that** said conversion is performed in an open process.

6. The process according to any of the preceding claims, **characterized in that** said conversion is performed at a temperature of between room temperature and 501 °C, especially at 410 °C.

7. The process according to any of the preceding claims, **characterized in that** said conversion is promoted by microwave irradiation.

8. The process according to any of the preceding claims, **characterized in that** said conversion is effected for a period of from 0.5 h to 24 h, especially 2 h.

9. The process according to any of the preceding claims, **characterized in that** sulfur is added in stoichiometric amounts.

10. The process according to any of the preceding claims, **characterized in that** sulfur is added in a solid state and the conversion is effected under a pressure of up to 10 bar.

11. The process according to any of claims 1 to 9, **characterized in that** said conversion proceeds in an atmosphere saturated with sulfur vapor.

12. The process according to any of claims 1 to 9, **characterized in that** sulfur is added in a gaseous state and the conversion is effected under reduced pressure.

13. The process according to any of claims 1 to 9, **characterized in that** the conversion is effected with a sulfur plasma.

## Revendications

1. Procédé d'extraction de métaux à partir de minerais contenant du sulfure de cuivre et/ou du sulfure de fer et de cuivre comprenant des étapes de lixiviation des métaux par voie microbiologique et/ou chimique, **caractérisé en ce que**,
1. dans une étape de conversion précédant les étapes de lixiviation, les minerais sont convertis, par addition de soufre et éventuellement d'additifs, en covelline, pyrite et en sulfures accessoires dans un four rotatif ou dans un réacteur à lit fluidisé, et
2. on extrait le cuivre contenu dans la covelline au moyen de procédés de lixiviation.

2. Procédé selon la revendication 1, **caractérisé en ce que** le fer est extrait du produit de la réaction et **en ce que** les métaux et les terres rares contenus dans le produit de la réaction, en particulier l'or, l'argent, le platine (y compris les éléments du groupe du platine), le cobalt, le nickel et le zinc sont séparés.

3. Procédé selon la revendication 1 ou 2, **caractérisé en ce que** les métaux sont dissous à l'aide d'un procédé de lixiviation et de biolixiviation et que le soufre est extrait de la covelline, de la pyrite et d'autres minéraux appartenant au groupe des sulfures en mettant en oeuvre un autre procédé.

4. Procédé selon l'une quelconque des revendications précédentes, **caractérisé en ce que** la réaction est réalisée sous une atmosphère inerte.

5. Procédé selon la revendication 1, **caractérisé en ce que** la conversion est réalisée dans un procédé ouvert.

6. Procédé selon l'une quelconque des revendications précédentes, **caractérisé en ce que** la réaction est réalisée à une température comprise entre la température ambiante et 501°C, en particulier à 410°C.

7. Procédé selon l'une quelconque des revendications précédentes, **caractérisé en ce que** la réaction est assistée par irradiation hyperfréquence.

8. Procédé selon l'une quelconque des revendications précédentes, **caractérisé en ce que** la réaction a lieu pendant une durée de 0,5 h à 24 h, en particulier de 2 h.

9. Procédé selon l'une quelconque des revendications précédentes, **caractérisé en ce que** le soufre est ajouté de manière stoechiométrique.

10. Procédé selon l'une quelconque des revendications précédentes, **caractérisé en ce que** le soufre est ajouté à l'état solide et **en ce que** la réaction est réalisée sous une pression allant jusqu'à 10 bars.

11. Procédé selon l'une quelconque des revendications 1 à 9, **caractérisé en ce que** la réaction se déroule sous une atmosphère saturée en vapeur de soufre.

12. Procédé selon l'une quelconque des revendications 1 à 9, **caractérisé en ce que** le soufre est ajouté à l'état gazeux et **en ce que** la réaction est réalisée sous un vide partiel.

13. Procédé selon l'une quelconque des revendications 1 à 9, **caractérisé en ce que** la réaction est réalisée au moyen d'un plasma de soufre.
